# EUROPEAN PATENT SPECIFICATION

(11) **EP 1 321 313 B1**
(45) Date of publication and mention of the grant of the patent: **04.10.2006**
(21) Application number: 02028368.5
(22) Date of filing: 18.12.2002
(51) Int. Cl.: B60C 15/06, B60C 15/00, B29D 30/08

(54) **Vehicle low-turn-up tire and production method thereof**
Fahrzeugreifen mit niedrigem Karkassenumschlag und Verfahren zur Herstellung desselben
Bandage pneumatique pour véhicule à bas retournement de carcasse et procédé de fabrication d'un tel pneu

(30) Priority: 21.12.2001 IT TO20011209
(43) Date of publication of application: 25.06.2003
(73) Proprietor: Bridgestone Technical Center Europe S.p.A., 00129 Roma (IT)
(72) Inventor: Gigliarelli, Adriano, 00163 Roma (IT); Musaio, Marco, 00151 Roma (IT)
(74) Representative: Jorio, Paolo

(56) References cited:
- US-A- 3 612 138
- US-A- 4 779 659
- US-B1- 6 223 797
- PATENT ABSTRACTS OF JAPAN vol. 007, no. 079 (M-204), 31 March 1983 (1983-03-31) & JP 58 004610 A (YOKOHAMA GOMU KK), 11 January 1983 (1983-01-11)

## Description

The present invention relates to a vehicle tire.

More specifically, the present invention relates to a vehicle tire of the type comprising a radial carcass having two sides; each side comprising a bead bundle, an annular bead filler extending radially outwards from said bead bundle and having a substantially triangular cross section, a body ply turned up about said bead bundle and comprising an outer annular turn-up portion, and a coating layer comprising an inner portion impermeable to air, an intermediate abrasion portion turned up about the bead bundle, and an outer portion defining a sidewall of the relative said side; the intermediate abrasion portion having an inside portion arranged axially inside said bead bundle, and the turn-up portion and the inside portion having similar widths.

In known tires of the type described above, known, in general, as "low turn-up tires", each annular turn-up portion, the reduced width of which ensures relatively low material weight and rolling resistance, is turned up about both the relative bead bundle and the relative annular bead filler, and is gripped between the annular bead filler and the relative coating layer, the intermediate portion and outer portion of which are defined respectively by an abrasion strip and a sidewall, softer than the abrasion strip, spliced to each other.

Since the stress transmitted by the annular turn-up portions to the surrounding materials increases as the width of the annular turn-up portions gets smaller, serious problems may arise when such width is reduced to become similar to that of the inner portion of the abrasion strip, i.e., in general, less than the distance between each of the aforementioned splices and the relative bead bundle, and the end of each annular turn-up portion directly contacts the inner surface of the relative abrasion strip. Such contact, in fact, may, on account of the hardness of the abrasion strips, result in the abrasion strips detaching from the body ply, and in rapid propagation through the abrasion strips of any cracks generated by the stress concentration, due to the difference in the stiffness of the materials, at the interface between the abrasion strips and the relative annular turn-up portions of the body ply.

In some known tires of the type specified above, the problem is normally solved by connecting each abrasion strip to the relative sidewall by means of an L or V-shaped splice, in which an annular appendix, extending radially inwards from an inner annular edge of the relative sidewall, provides for absorbing the stress transmitted by the relative annular turn-up portion by being interposed between the relative annular turn-up portion and the relative abrasion strip.

In other known tires, such as that disclosed in US-A-3,612,138, which is in accordance with the preamble of claim 1, the problem is normally solved by connecting each abrasion strip to the relative sidewall by means of an L or V-shaped splice, in which an annular appendix, extending radially inwards from an inner annular edge of the relative sidewall, is embedded in the material constituting the relative bead portion, and a cushion is interposed between the turn-up portion of the body ply and the abrasion strip.

Splices of the type described above, however, are relatively complicated and expensive, and, to be made properly, normally require manual intervention.

It is an object of the present invention to provide a vehicle tire, of the type specified above, designed to overcome the aforementioned drawbacks.

More specifically, it is an object of the present invention to provide a tire of the type specified above, which is cheap and easy to produce, and which is so structured as to minimize not only the stress transmitted by the annular turn-up portions of the body ply to the surrounding material, but also the propagation rate through the surrounding material of any cracks or similar generated by such stress.

According to the present invention, there is provided a vehicle tire as claimed in Claim 1 and, preferably, in any dependent claim appended directly or indirectly to Claim 1.

The invention will now be described by way of examples with reference to the accompanying drawings, in which:
Figure 1 shows a schematic partial axial section of a known conventional tire;
Figure 2 shows a schematic axial section of a preferred embodiment of the tire according to the present invention;
Figure 3 shows the same view as in Figure 1, of a variation of the Figure 2 tire which is not however according to the invention;
Figure 4 shows a spread-out cross section of a component in Figure 2;
Figure 5 shows a graph of the crack propagation rate, alongside variations in stress, through various Figure 1 tire components and through the Figure 4 component.

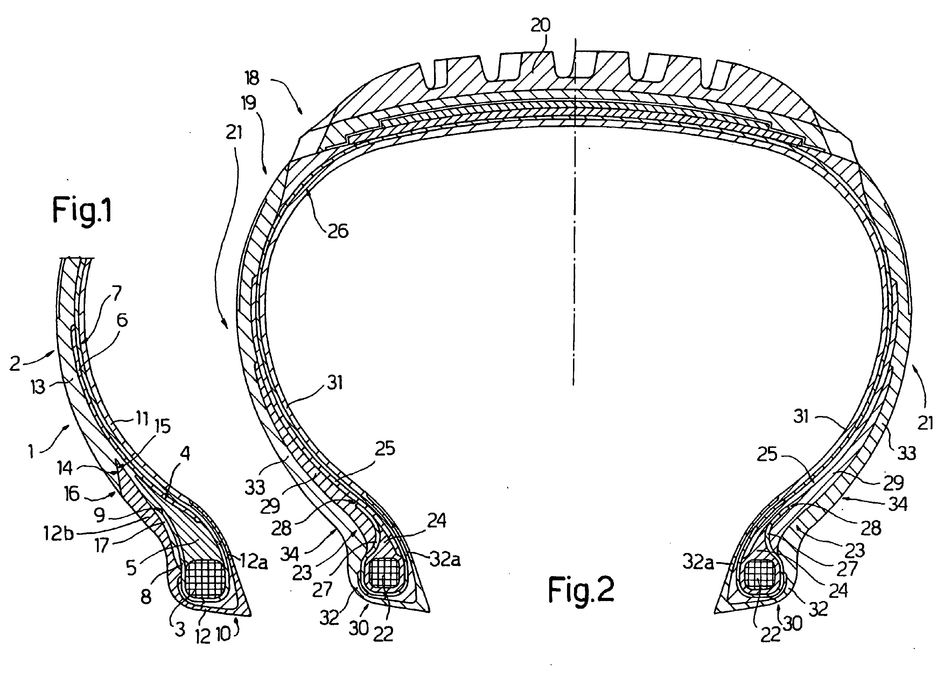

Number 1 in Figure 1 indicates as a whole a known vehicle tire comprising two sides 2 (only one shown), each of which in turn comprises a bead bundle 3 having an annular, substantially triangular-section bead filler 4 defined by an annular filler element 5 extending radially outwards from bead bundle 3, and by a reinforcing strip 6, which is made of the same material as annular filler element 5, is positioned contacting an axially inner surface of annular filler element 5, and extends along side 2 radially outwards of an outer vertex of annular filler element 5.

Each side 2 also comprises a relative portion of a body ply 7, which is turned up about the relative bead bundle 3 and relative annular filler element 5 to form an annular turn-up portion 8, a free edge 9 of which is positioned contacting an axially outer surface of the relative annular filler element 5, and at a distance of 15 to 20 cm from an inner edge of relative bead bundle 3.

Each side 2 also comprises a coating layer 10 in turn comprising an inner portion defined by an innerliner 11 impermeable to air, an intermediate portion turned up about relative bead bundle 3 and defined by an abrasion strip 12, and an outer portion defined by a sidewall 13 made from a normally softer, more elastic mix than abrasion strip 12. Abrasion strip 12 includes an inside portion 12a arranged axially inside bead bundle 3 and having a width similar to that of turn-up portion 8, and an outside portion 12b arranged axially outside bead bundle 3, larger than inside portion 12a and having an outer edge 14 located radially outwards of the relative free edge 9 of relative annular turn-up portion 8, and connected to an inner edge 15 of relative sidewall 13 by an L-shaped splice 16, wherein relative outer edge 14 is connected directly to relative inner edge 15, and an outer end portion of outside portion 12b of relative abrasion strip 12 rests on and in contact with an annular appendix 17, which projects radially inwards from relative inner edge 15 and is interposed, to act as a damper, between abrasion strip 12 and relative annular turn-up portion 8.

To eliminate the structural and assembly problems posed by the L-shaped splice 16 described above - which is justified in tire 1 by the need to prevent the relative turn-up portion 8 and, in particular, its free edge 9 from coming into direct contact with the inner surface of abrasion strip 12 - a tire 18, as shown in Figure 2, has been designed comprising a radial carcass 19, a central annular portion of which is covered externally with a tread 20, and two lateral portions of which define respective sides 21 of tire 18.

In tire 18, each side 21 comprises a bead bundle 22 having an annular, substantially triangular-section bead filler 23, in turn comprising an inner annular filler element 24 extending radially outwards from and integral with bead bundle 22. Annular bead filler 23 also comprises a reinforcing strip 25, which is made of the same material as inner annular filler element 24, is positioned contacting an axially inner surface of inner annular filler element 24, and extends along side 21 radially outwards of an outer vertex of inner annular filler element 24.

Each side 21 also comprises a relative portion of a body ply 26, which is turned up about bead bundle 22 and inner annular filler element 24 to form an annular turn-up portion 27, a free edge 28 of which is positioned radially outwards of an outer vertex of inner annular filler element 24, contacting an axially outer surface of reinforcing strip 25, and at a distance of 15 to 20 cm from an inner edge of relative bead bundle 22.

Each annular bead filler 23 also comprises an outer annular filler element 29 located radially outwards of relative inner annular filler element 24 and contacting the axially outer surface of relative reinforcing strip 25. Outer annular filler element 29 is made of the same material (hereinafter referred to as "Mix A") as relative inner annular filler element 24 and relative reinforcing strip 25, and grips relative annular turn-up portion 27 against relative inner annular filler element 24, and relative free edge 28 against relative reinforcing strip 25.

Each side 21 also comprises a coating layer 30, in turn comprising an inner portion defined by an innerliner 31 impermeable to air, an intermediate abrasion portion 32 turned up about relative bead bundle 22 and including an inside portion 32a arranged axially inside bead bundle 22 and having a width similar to that of turn-up portion 27, and an outer portion 33 defining a sidewall of side 21.

Portions 32 and 33 are defined by a single coating strip 34 made from a single mix (hereinafter referred to as "Mix B"), the mechanical characteristics of which are substantially somewhere between those of the mix (hereinafter referred to as "Mix C") from which abrasion strip 12 is made, and the mix (hereinafter referred to as "Mix D") from which sidewall 13 is made.

The mechanical characteristics of Mixes A, B, C and D are shown in the Table below:

| CHARACTERISTICS | "A" | "B" | "C" | "D" |
|---|---|---|---|---|
| Ultimate elongation (%) | 200- 350 | 400- 550 | 300- 450 | 550 - 700 |
| Tensile strength (MPa) | 18 - 22 | 18 - 22 | 18 - 22 | 18 - 22 |
| 100% strain load (MPa) | 10-12 | 3-4 | 4-5 | 1-2 |
| 200% strain load (MPa) | 18 - 19 | 8 - 10 | 10 - 12 | 4 - 5 |
| Shore "A" hardness | 90 - 95 | 60 - 70 | 65 - 75 | 50 - 55 |

The fact that each annular turn-up portion 27 of tire 18 is substantially embedded in relative annular bead filler 23, i.e. in a homogenous, relatively hard material, provides for substantially evenly distributing the stress generated by annular turn-up portion 27 in relative annular bead filler 23, and for preventing concentrated stress, which could eventually produce cracks, from being transmitted outwards, i.e. to coating layer 30.

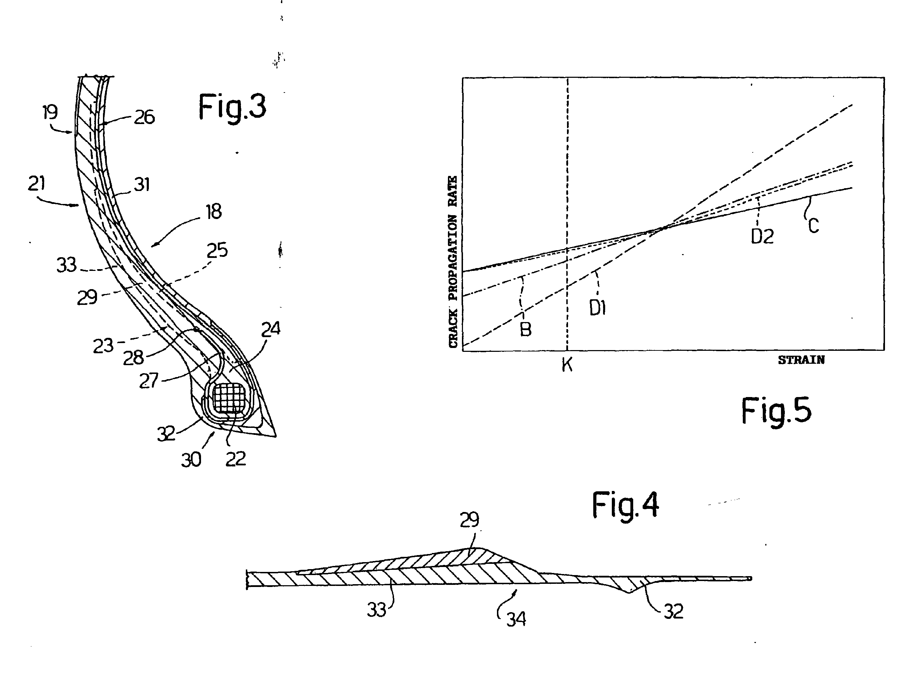

As shown in Figure 5 - which shows a graph of crack propagation rate (y-axis) versus strain (x-axis) based on the results of dynamic tests of four different mixes : two mixes D1 and D2 with mechanical characteristics at opposite ends of the ranges shown in the above Table; a medium mix B; and a medium mix C - for strain values about a point K corresponding to normal service strain, the crack propagation rate through mix B is perfectly acceptable and lower than that of mix D2.

In tire 18, too, each coating layer 30 may obviously be replaced with an abrasion strip 12 and sidewall 13 similar to those of tire 1 and connected to each other by a splice (not shown) which, in this case, may be a straightforward butt splice. Using a one-component coating layer with no splicing, such as coating layer 30, however, has major practical advantages when assembling tire 18. That is, as shown in Figure 4, using coating layer 30 with no intermediate splicing provides for coextruding or calendering together and preassembling each outer annular filler element 29 with the relative coating layer 30, and for assembling the outer annular filler elements 29 together with the relative coating layers 30, thus simplifying the assembly procedure.

In the Figure 3 variation, in each side 21, both annular filler elements 24 and 29, reinforcing strip 25, and coating layer 30 are all made from the same mix B with mechanical characteristics at the top end of the ranges in the above Table.

## Claims

1. A vehicle tire (18) comprising a radial carcass (19) having two sides (21); each side (21) comprising:
a bead bundle (22);
an annular bead filler (23) extending radially outwards from said bead bundle (22) and having a substantially triangular cross section;
a body ply (26) turned up about said bead bundle (22) and comprising an outer annular turn-up portion (27); and
a coating layer (30) comprising an inner portion (31) impermeable to air, an intermediate abrasion portion (32) turned up about the bead bundle (22) and having an inside portion (32a) arranged axially inside said bead bundle (22), and an outer portion (33) defining a sidewall of the relative said side (21); wherein said intermediate portion (32) and said outer portion (33) of each said coating layer (30) comprise a single coating strip (34) made from a single mix;
the vehicle tire (18) is **characterized in that**
the turn-up portion (27) and the inside portion (32a) have similar widths; and
each annular turn-up portion (27) is turned up about the relative bead bundle (22) in a closed loop and divides transversely the relative annular bead filler (23) into a first annular filler element (24) contacting directly the relative bead bundle (22) and the relative annular turn-up portion (27) and arranged inside the relative loop, and a second annular filler element (29) located outside the relative loop and extending radially outwards from the relative first annular filler element (24) with the interposition of the relative annular turn-up portion (27).

2. A tire as claimed in Claim 1, wherein each said annular turn-up portion (27) has a free annular edge (28) embedded in the relative second annular filler element (29) .

3. A tire as claimed in Claim 1 or 2, wherein each said annular turn-up portion (27) is of 15 to 20 millimetres in width.

4. A tire as claimed in Claim 2 or 3, wherein each said annular bead filler (23) also comprises a reinforcing strip (25) located contacting and axially inwards of the relative said first and second annular filler element (24, 29); the free annular edge (28) of the relative said turn-up portion (27) being located between said second annular filler element (29) and said reinforcing strip (25).

5. A tire as claimed in one of the foregoing Claims, wherein each said coating strip (34) and the relative said second annular filler element (29) are formed by co-extrusion or calendering.

6. A tire as claimed in one of the foregoing Claims, wherein each said coating strip (34) and the relative said annular bead filler (23) are made of one material.

7. A tire as claimed in Claim 6, wherein said one material is a mix with an ultimate elongation of 400-550%.

8. A tire as claimed in Claim 6 or 7, wherein said one material is a mix with a tensile strength of 18-22 MPa.

9. A tire as claimed in one of Claims 6 to 8, wherein said one material is a mix with a 100% strain load of 3-4 MPa, and a 200% strain load of 8-10 MPa.

10. A tire as claimed in one of Claims 6 to 9, wherein said one material is a mix with a Shore A" hardness of 60-70.

## Patentansprüche

1. Fahrzeugreifen (18), aufweisend eine radiale Karkasse (19) mit zwei Seiten (21),
wobei jede Seite (21) aufweist:
einen Wulstkern (22);
einen ringförmigen Kernreiter (23), der sich von dem Wulstkern (22) radial nach außen erstreckt und einen im Wesentlichen dreieckigen Querschnitt aufweist;
eine Karkassenlage (26), die um den Wulstkern (22) gewunden ist und einen äußeren ringförmigen Umschlagabschnitt (27) aufweist; und
eine Belagschicht (30), die einen luftundurchlässigen inneren Abschnitt (31), einen zwischengeschalteten Verschleißabschnitt (32), der um den Wulstkern (22) gelegt ist und einen Innenabschnitt (32a) aufweist, der axial in dem Wulstkern (22) angeordnet ist, und einen Außenabschnitt (33) aufweist, der eine Seitenwand der jeweiligen Seite (21) abgrenzt; wobei der Zwischenabschnitt (32) und der Außenabschnitt (33) von jeder Belagschicht (30) einen einzigen Überzugsstreifen (34) aus einer einzigen Mischung aufweist;
wobei der Fahrzeugreifen (18) **dadurch gekennzeichnet ist, dass**
der Umschlagabschnitt (27) und der Innenabschnitt (32a) ähnliche Weiten aufweisen; und
jeder ringförmige Umschlagabschnitt (27) in einem geschlossenen Kreis um den jeweiligen Wulstkern (22) gelegt ist und den jeweiligen ringförmigen Kernreiter (23) quer in ein erstes ringförmiges Reiterelement (24), das den jeweiligen Wulstkern (22) und den jeweiligen ringförmigen Umschlagabschnitt (27) unmittelbar berührt und in dem jeweiligen Kreis angeordnet ist, und ein zweites ringförmiges Reiterelement (29) teilt, das sich außerhalb des jeweiligen Kreises befindet und sich von dem jeweiligen ersten ringförmigen Reiterelement (24) unter Zwischenschiebung des jeweiligen ringförmigen Umschlagabschnitts (27) radial nach außen erstreckt.

2. Reifen nach Anspruch 1, wobei jeder ringförmige Umschlagabschnitt (27) eine freie ringförmige Kante (28) aufweist, die in dem jeweiligen zweiten ringförmigen Reiterelement (29) eingebettet ist.

3. Reifen nach Anspruch 1 oder 2, wobei jeder ringförmige Umschlagabschnitt (27) eine Weite von 15 bis 20 Millimetern aufweist.

4. Reifen nach Anspruch 2 oder 3, wobei jeder ringförmige Kernreiter (23) auch einen Verstärkungsstreifen (25) aufweist, der sich in Berührung mit und axial nach innen von dem jeweiligen ersten und zweiten ringförmigen Reiterelement (24, 29) befindet, wobei sich die freie ringförmige Kante (28) des jeweiligen Umschlagabschnitts (27) zwischen dem zweiten ringförmigen Reiterelement (29) und dem Verstärkungsstreifen (25) befindet.

5. Reifen nach einem der vorhergehenden Ansprüche, wobei jeder Überzugsstreifen (34) und das jeweilige zweite ringförmige Reiterelement (29) durch gemeinsame Extrusion oder Kalandrieren gebildet sind.

6. Reifen nach einem der vorhergehenden Ansprüche, wobei jeder Überzugsstreifen (34) und der jeweilige ringförmige Kernreiter (23) aus einem Material gefertigt sind.

7. Reifen nach Anspruch 6, wobei das eine Material eine Mischung mit einer Bruchdehnung von 400-550% ist.

8. Reifen nach Anspruch 6 oder 7, wobei das eine Material eine Mischung mit einer Zugfestigkeit von 18-22 MPa ist.

9. Reifen nach einem der Ansprüche 6 bis 8, wobei das eine Material eine Mischung mit einer 100%igen Dehnungsbelastung von 3-4 MPa und einer 200%igen Dehnungsbelastung von 8-10 MPa ist.

10. Reifen nach einem der Ansprüche 6 bis 9, wobei das eine Material eine Mischung mit einer Shore-Härte "A" von 60-70 ist.

## Revendications

1. Pneu de véhicule (18) comprenant une carcasse radiale (19) ayant deux flancs (21); chaque flanc (21) comprenant:
une tringle (22);
un bourrage sur tringle annulaire (23) s'étendant radialement vers l'extérieur depuis ladite tringle (22) et présentant une section transversale sensiblement triangulaire;
une nappe carcasse (26) repliée autour de ladite tringle (22) et comprenant une partie de revers annulaire externe (27); et
une couche de revêtement (30) comprenant une partie interne (31) imperméable à l'air, une partie d'usure intermédiaire (32) repliée autour de la tringle (22) et ayant une partie intérieure (32a) agencée axialement à l'intérieur de ladite tringle (22), et une partie externe (33) définissant une paroi latérale dudit flanc (21) relatif; dans lequel ladite partie intermédiaire (32) et ladite partie externe (33) de chaque couche de revêtement (30) comprennent une seule bande de revêtement (34) faite d'un seul mélange;
le pneu de véhicule (18) étant **caractérisé en ce que**
la partie de revers (27) et la partie intérieure (32a) ont des largeurs similaires; et
chaque partie de revers annulaire (27) est repliée autour de la tringle (22) relative en une boucle fermée et divise transversalement le bourrage sur tringle annulaire (23) relatif en un premier élément de bourrage annulaire (24) directement en contact avec la tringle (22) relative et la partie de revers annulaire (27) relative et agencé à l'intérieur de la boucle relative, et un deuxième élément de bourrage annulaire (29) situé à l'extérieur de la boucle relative et s'étendant radialement vers l'extérieur depuis le premier élément de bourrage annulaire (24) relatif avec interposition de la partie de revers annulaire (27) relative.

2. Pneu selon la revendication 1, dans lequel chaque partie de revers annulaire (27) a un bord annulaire libre (28) intégré dans le deuxième élément de bourrage annulaire (29) relatif.

3. Pneu selon la revendication 1 ou 2, dans lequel chaque partie de revers annulaire (27) a une largeur de 15 à 20 millimètres.

4. Pneu selon la revendication 2 ou 3, dans lequel chaque bourrage sur tringle annulaire (23) comprend aussi une bande de renfort (25) placée en contact et axialement à l'intérieur dudit premier ou deuxième élément de bourrage annulaire (24, 29) relatif; le bord annulaire libre (28) de ladite partie de revers (27) relative étant placé entre ledit deuxième élément de bourrage annulaire (29) et ladite bande de renfort (25).

5. Pneu selon l'une des revendications précédentes, dans lequel chaque bande de revêtement (34) et ledit deuxième élément de bourrage annulaire (29) relatif sont formés par co-extrusion ou calandrage.

6. Pneu selon l'une des revendications précédentes, dans lequel chaque bande de revêtement (34) et ledit bourrage sur tringle annulaire (23) relatif sont faits d'un seul matériau.

7. Pneu selon la revendication 6, dans lequel ledit matériau est un mélange présentant un allongement à la rupture de 400-550%.

8. Pneu selon la revendication 6 ou 7, dans lequel ledit matériau est un mélange présentant une résistance à la traction en traction de 18-22 Mpa.

9. Pneu selon l'une des revendications 6 à 8, dans lequel ledit matériau est un mélange présentant une charge d'élongation à 100% de 3-4 MPa, et une charge d'élongation à 200% de 8-10 MPa.

10. Pneu selon l'une des revendications 6 à 9, dans lequel ledit matériau est un mélange présentant une dureté Shore "A" de 60-70.
